# EUROPÄISCHE PATENTSCHRIFT

(11) **EP 2 178 794 B1**
(45) Veröffentlichungstag und Bekanntmachung des Hinweises auf die Patenterteilung: **06.04.2011**
(21) Anmeldenummer: 08787019.2
(22) Anmeldetag: 08.08.2008
(51) Int. Cl.: C01B 33/037

(54) **VERFAHREN ZUM REINIGEN VON POLYKRISTALLINEM SILICIUM**
PROCESS FOR PURIFYING POLYCRYSTALLINE SILICON
PROCÉDÉ DE PURIFICATION DE SILICIUM POLYCRISTALLIN

(30) Priorität: 22.08.2007 DE 102007039626
(43) Veröffentlichungstag der Anmeldung: 28.04.2010
(73) Patentinhaber: Wacker Chemie AG, 81737 München (DE)
(72) Erfinder: WOCHNER, Hanns, 84489 Burghausen (DE); GOSSMANN, Christian, 84547 Emmerting (DE); LINDNER, Herbert, A-5121 Ostermiething (AT)
(74) Vertreter: Mieskes, Klaus Theoderich
(86) Internationale Anmeldenummer: PCT/EP2008/060423
(87) Internationale Veröffentlichungsnummer: WO 2009/033900

(56) Entgegenhaltungen:
- EP-A1- 0 905 796
- EP-A2- 0 548 504
- EP-A2- 1 894 887
- WO-A2-2009/024478
- DE-A1- 19 529 518

## Beschreibung

Die Erfindung betrifft ein Verfahren zum Reinigen von polykristallinem Silicium ohne Chlorwasserstoffsäure und ohne Wasserstoffperoxid.

Für die Herstellung von Solarzellen oder elektronischen Bauelementen, wie beispielsweise Speicherelementen oder Mikroprozessoren, wird hochreines Halbleitermaterial benötigt. Die gezielt eingebrachten Dotierstoffe sind die einzigen Verunreinigungen, die ein derartiges Material im günstigsten Fall aufweisen sollte. Man ist daher bestrebt, die Konzentrationen schädlicher Verunreinigungen so niedrig wie möglich zu halten. Häufig wird beobachtet, dass bereits hochrein hergestelltes Halbleitermaterial im Verlauf der weiteren Verarbeitung zu den Zielprodukten erneut kontaminiert wird. So werden immer wieder aufwändige Reinigungsschritte notwendig, um die ursprüngliche Reinheit zurückzuerhalten. Fremdmetallatome, die in das Kristallgitter des Halbleitermaterials eingebaut werden, stören die Ladungsverteilung und können die Funktion des späteren Bauteils vermindern oder zu dessen Ausfall führen. Infolgedessen sind insbesondere Kontaminationen des Halbleitermaterials durch metallische Verunreinigungen zu vermeiden. Dies gilt insbesondere für Silicium, das in der Elektronikindustrie mit deutlichem Abstand am häufigsten als Halbleitermaterial eingesetzt wird. Hochreines Silicium erhält man beispielsweise durch thermische Zersetzung leicht flüchtiger und deshalb einfach über Destillationsverfahren zu reinigender Siliciumverbindungen, wie beispielsweise Trichlorsilan. Es fällt dabei polykristallin in Form von Stäben mit typischen Durchmessern von 70 bis 300 mm und Längen von 500 bis 2500 mm an. Ein großer Teil der Stäbe wird zur Produktion von tiegelgezogenen Einkristallen, von Bändern und Folien oder zur Herstellung von polykristallinem Solarzellengrundmaterial verwendet. Da diese Produkte aus hochreinem, schmelzflüssigem Silicium hergestellt werden, ist es notwendig, festes Silicium in Tiegeln aufzuschmelzen. Um diesen Vorgang möglichst effektiv zu gestalten, müssen großvolumige, massive Siliciumstücke, wie beispielsweise die erwähnten polykristallinen Stäbe, vor dem Aufschmelzen zerkleinert werden. Dies ist üblicherweise immer mit einer oberflächlichen Verunreinigung des Halbleitermaterials verbunden, weil die Zerkleinerung mit metallischen Brechwerkzeugen, wie Backen- oder Walzenbrechern, Hämmern oder Meißeln, erfolgt. Diese Verunreinigungen bestehen beispielsweise aus Metallcarbid-, Diamantrückständen und metallischen Verunreinigungen.

Bei der Zerkleinerung ist sorgfältig darauf zu achten, dass die Oberflächen der Bruchstücke nicht mit Fremdstoffen verunreinigt werden. Insbesondere ist die Kontamination durch Metallatome als kritisch anzusehen, da diese die elektrischen Eigenschaften des Halbleitermaterials in schädlicher Weise verändern können. Wird das zu zerkleinernde Halbleitermaterial, wie bisher überwiegend üblich, mit mechanischen Werkzeugen, wie beispielsweise stählernen Brechern, zerkleinert, so müssen die Bruchstücke vor dem Aufschmelzen einer Oberflächenreinigung unterzogen werden.

Um mechanisch bearbeitetes, polykristallines Silicium oder polykristalline Siliciumkörner, die aus mechanisch bearbeiteten Partikeln als Kernsilicium zur Herstellung von monokristallinem Silicium erzeugt sind, als Ausgangsmaterial einsetzen zu können, ist es notwendig, die Konzentration der Verunreinigungen herabzusetzen, die auf der Oberfläche des mechanisch bearbeiteten polykristallinen Siliciums vorhanden sind.

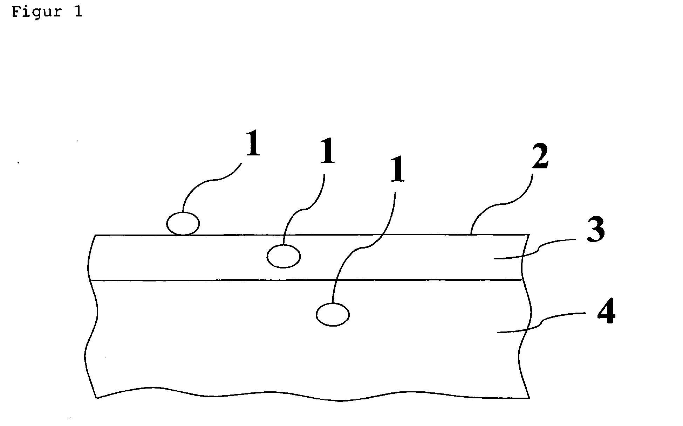

Durch die Zerkleinerung gelangen in dem erzeugten Polysiliciumbruch die Verunreinigungen zum Teil auch in tiefere Oberflächenschichten (**Figur 1**). Beispielsweise gelangen Metallpartikel (**1**) aus Metallcarbid-Rückständen vom Abrieb der Zerkleinerungsmaschinen oder Diamantpartikel aus dem Abrieb von Sägeblättern auf der Oberfläche des Polysiliciums nicht nur auf die Oberfläche (**2**), sondern auch bis in die native Oxidschicht (**3**) und ins Silicium-Gitter (**4**).

Zur Entfernung der Verunreinigungen wird beispielsweise die Oberfläche des mechanisch bearbeiteten polykristallinen Siliciums mit einer Mischung aus Salpetersäure und Fluorwasserstoffsäure geätzt. Bei dem Prozess werden in der Vorreinigung die Metallpartikel von der Säuremischung stark angegriffen. Zurück bleiben Metallcarbidrückstände, die in der HF/HNO₃-Hauptreinigung weitestgehend aufgelöst werden.

EP 0 905 796 beschreibt einen Reinigungsprozess bestehend aus einer Vorreinigung mittels einer oxidierenden Mischung aus Fluorwasserstoffsäure, Salzsäure und Wasserstoffperoxid, aus einer Hauptreinigung mittels Fluorwasserstoffsäure und Salpetersäure und aus einer anschließenden Hydrophilierung der Siliciumoberfläche mit einer oxidierenden Reinigungslösung (Salzsäure und Wasserstoffperoxid).

DE 195 29 518 beschreibt ein Reinigungsverfahren, in dem polykristallines Silicium zuerst mit einer Mischung aus Königswasser (Mischung aus Salzsäure und Salpetersäure) gereinigt und des Weiteren einer Reinigung mit Fluorwasserstoffsäure unterzogen wird. Dieses Verfahren liefert aber nur schlechte Reinigungsergebnisse.

JP 06 02 10 34 offenbart eine Reinigungslösung für Halbleitermaterial. Die Reinigungslösung setzt sich aus Wasser, 30 bis 50 % HNO₃ und 0,1 bis 1% HF zusammen.

In JP 051-54466 wird ein Reingungsverfahren beschrieben, bei dem Fluorwasserstoffsäure und Salpetersäure verwendet werden. Die verbleibende Eisenkonzentration bei diesem Verfahren ist nach den heutigen Ansprüchen an die Reinheit von Polysilicium nicht mehr ausreichend.

EP 0905796 beschreibt einen Reinigungsprozess bestehend aus einer Vorreinigung mittels einer Mischung bestehend aus HF/HCl/H₂O₂ einer Hauptreinigung mittels HF/HNO₃ und einer anschließenden Hydrophilierung der Siliciumoberfläche durch HCl/H₂O₂. Bei diesem Prozess werden in der Vorreinigung die Metallpartikel von der Säuremischung stark angegriffen. Zurück bleiben Metallcarbidrückstände die in der HF/HNO₃-Hauptreinigung weitestgehend aufgelöst werden.

Nachteilig bei diesem Verfahren sind jedoch die auftretenden Abgase. So treten bei der Vorreinigung gasförmiges Chlor, HF und HCl auf, bei der Hauptreinigung Stickoxide und HF und bei der Hydrophilierung Chlorgas.

Die Abgasströme aus der Vorreinigung/Hydrophilierung dürfen aufgrund des Risikos der Bildung von Königswasser nicht über ein gemeinsames Abgasentsorgungssystem entsorgt werden. Königswasser zerstört bereits in geringen Mengen Kunststoffe, wie Polypropylen (PP) oder Polyethylen (PE). Dies hat zur Folge, dass zwei völlig getrennte Systeme zur Entsorgung der Abgase notwendig sind. Zusätzlich müssen die Abgase aus der Vorreinigung und der Hydrophilierung in einem Chlorwäscher entsorgt werden, die Abgase der Hauptreinigung in einem Stickoxidwäscher.

Ein weiterer Nachteil an diesem Verfahren ist der hohe spezifische Säureverbrauch und die damit verbundenen Säurekosten.

Aufgabe der Erfindung war es ein Verfahren zur Reinigung von Polysilicium bereitzustellen, bei dem der Säureverbrauch signifikant niedriger ist und die beschriebenen Probleme bei der Abgasentsorgung nicht auftreten.

Überraschenderweise wurde gefunden, dass bei einer Vorreinigung mit einer Lösung aus Fluorwasserstoffsäure, Salpetersäure und Hexafluorokieselsäure auf die Substanzen Chlorwasserstoffsäure und Wasserstoffperoxyd verzichtet werden kann.

Gegenstand der Erfindung ist ein Verfahren zur Reinigung von Polysilicium umfassend die Schritte
a.) Vorreinigung in zumindest einer Stufe mit einer oxidierenden Reinigungslösung enthaltend Fluorwasserstoffsäure, Salpetersäure und Hexafluorokieselsäure,
b.) Hauptreinigung in einer weiteren Stufe mit einer Reinigungslösung, enthaltend Salpetersäure und Fluorwasserstoffsäure, wobei diese in der vorreinigung wiederverwendet wird
c.) Hydrophilierung in einer weiteren Stufe mit einer oxidierenden Reinigungslösung.

Untersuchungen haben gezeigt, dass überraschenderweise die Vorreinigung mit einer verdünnten HF/HNO₃/H₂SiF₆-Mischung mit einem niedrigen HNO₃-Gehalt zu sehr guten Ergebnissen führt. Bevorzugt wird dabei ein HNO₃-Gehalt von 5 bis 35 Gew.-% der Reinigungslösung.

Überraschenderweise konnte damit für die erfingungsgemäße Zusammensetzung der Reinigungslösung ein Konzentrationsbereich gefunden werden, der bezüglich der Auflöseraten von Metallen und Silicium ebensogute Werte erzielt, wie die im Stand der Technik (EP 0905796) beschriebenen Vorreinigungen mit einer Lösung aus HF/HCl/H₂O₂.

Der Angriff auf die Stahlpartikel durch die Anwesenheit von Flusssäure und insbesondere von Hexafluorokieselsäure wird in einer verdünnten HNO₃ Lösung dabei überraschenderweise nicht beeinträchtigt.

Die Vorreinigung kann bei Temperaturen von 0 bis 60°C erfolgen. Bevorzugt geschieht die Vorreinigung bei einer Temperatur von 10 bis 40°C, besonders bevorzugt bei 20 bis 30°C.

Die Hydrophilierung kann in einer wässrigen Ozonlösung, ohne Anwesenheit von Wasserstoffperoxid stattfinden. Bei dem erfindungsgemäßen mehrstufigen Reinigungsprozess können die Abgase alle gemeinsam über einen Stickoxidwäscher entsorgt werden. Durch den Verzicht von Chlorwasserstoffsäure und Wasserstoffperoxid im Reinigungsprozess kann auf den Chlorwäscher für das Abgas verzichtet werden. Die Investitionskosten für den Gesamtprozess sinken dadurch erheblich.

In einer Ausführungsform des erfindungsgemäßen Reinigungsverfahrens können die Vorreinigung und die Hauptreinigung in separaten Säurekreisläufen stattfinden. Dabei werden für die einzelnen Schritte jeweils frische Reinigungslösungen zubereitet. Die erforderlichen Säurekonzentrationen werden dabei gezielt durch eine Nachdosierung mit Fluorwasserstoffsäure und Salpetersäure eingestellt.

In einer besonderen Ausführungsform des Reinigungsprozesses erfolgt dieser in Form einer Kaskade zwischen der Vor- und Hauptreinigung. Hierbei wird die aus der Hauptreinigung entstehende Abfallsäure enthaltend HF, HNO/HNO₂ und H₂SiF₆, in der Vorreinigung erneut verwendet. Durch die Verwendung einer derartigen Kaskade mit Wiedereinsatz der Säuren kann der spezifische Säureverbrauch des Gesamtverfahrens stark gesenkt werden.

Anhand der folgenden Beispiele soll die Erfindung näher erläutert werden.

Die Metallanalysen am gereinigten Polybruch wurden folgendermaßen durchgeführt:
In einem Teflontrichter wurde 100 g schweres Polysilizium mit 40 ml einer Mischung aus HF/HNO₃ im Verhältnis 1:4 abgespritzt.
   Die Ätzsäure wurde in einem Teflonbecher aufgefangen.
   Anschließend wurde die Säure abgedampft und der Rückstand in 5 ml Wasser aufgenommen. Der Metallgehalt der wässrigen Lösung wird am ICP-AES (Induktiv-gekoppeltes Ionenplasma-Atomemissionsspektroskop der Firma Spectro gemessen. Aus den gemessenen Werten wurde der Metallgehalt der Polyoberfläche berechnet. Die Angaben erfolgen in pptw.

### Beispiel 1:

### Reinigung von Polybruch in einer Vorreinigung mit einer Säuremischung aus HF/HN03/H2SiF6:

Ein Polysiliziumstab wurde mittels einer Vorrichtung aus einem Zerkleinerungswerkzeug und einer Siebvorrichtung zerkleinert und klassiert. 5 kg Polybruch wurden in einer Prozessschale mit folgendem dreistufigen Reinigungsprozess behandelt. Die Vorreinigung und die Hauptreinigung erfolgten dabei in separaten Säurekreisen. Zur Vorreinigung wurde der Polysiliciumbruch 20 Minuten in einer Mischung aus 30 Gew.-% HNO₃, 6 Gew.-% HF, 1 Gew.-% Si und 0,5 Gew.-% HNO₂ bei einer Temperatur von 25°C gereinigt. Der Abtrag der Polysiliciumoberfläche betrug dabei 1 µ.

Bei der anschließenden Hauptreinigung wurde der Polysiliciumbruch 5 Minuten bei 8°C in einer Mischung von HF/HNO₃ mit 6 Gew.-% HF, 55 Gew.-% HNO₃ und 1 Gew.-% Si geätzt. Der Ätzabtrag betrug dabei ca. 30 µm. Danach wurde 5 Minuten in Reinstwasser mit 18 Megaohm bei einer Temperatur von 22°C Grad gespült. Der Polysiliciumbruch wurde anschließend in einem weiteren Schritt in einer Mischung aus HF/Ozon mit 2 Gew.-% HF und 20 ppm Ozon für 5 Minuten gereinigt und danach für weitere 5 Minuten gespült. Abschließend wurde 5 Minuten in einem Wasser mit 20 ppm Ozon bei einer Temperatur von 22°C hydrophiliert und 60 Minuten mit Reinstluft der Klasse 100 bei 80°C getrocknet.

Folgende Metalloberflächenwerte wurden dabei erhalten:

| Element | Konzentration | | Element | Konzentration |
|---|---|---|---|---|
| Fe | 26,72 pptw | | Ti | 14,10 pptw |
| Cr | 9,86 pptw | | W | 1,52 pptw |
| Ni | 2,68 pptw | | K | 29,33 pptw |
| Na | 38,80 pptw | | Co | 0,56 pptw |
| Zn | 18,47 pptw | | Mn | 3,15 pptw |
| Al | 40,24 pptw | | Ca | 53,06 pptw |
| Cu | 0,69 pptw | | Mg | 10,00 pptw |
| Mo | 0,62 pptw | | V | 1,44 pptw |

### Vergleichsbeispiel 1:

Es wurde wie in Beispiel 1 vorgegangen, jedoch wurde, wie aus EP 0905796 bekannt, zur Vorreinigung eine Mischung bestehend aus HF/HCl/H₂O₂ für die Hauptreinigung HF/HNO₃ und zur anschließenden Hydrophilierung der Siliciumoberfläche verwendet HCl/H₂O₂.

Folgende Metalloberflächenwerte wurden dabei erhalten:

| Element | Konzentration | | Element | Konzentration |
|---|---|---|---|---|
| Fe | 28,59 pptw | | Ti | 15,86 pptw |
| Cr | 12,08 pptw | | W | 2,73 pptw |
| Ni | 7,72 pptw | | K | 42,98 pptw |
| Na | 40,98 pptw | | Co | 0,18 pptw |
| Zn | 7,90 pptw | | Mn | 1,75 pptw |
| Al | 45,56 pptw | | Ca | 60,97 pptw |
| Cu | 1,58 pptw | | Mg | 16,60 pptw |
| Mo | 0,16 pptw | | V | 1,48 pptw |

### Beispiel 2:

### Reinigung von Polybruch in einer Vorreinigung mit einer Säuremischung aus HF/HN03/H2SiF6 in einer Ätzkaskade:

Es wurde analog Beispiel 1 verfahren. Die Vorreinigung und die Hauptreinigung sind aber miteinander verbunden. Die Säure aus der Hauptreinigung fließt dabei nach der Hauptreinigung in die Vorreinigung und wird dort zur Vorreinigung verwendet. Zur Einstellung eventueller abweichender Säurekonzentrationen kann die benötigte Säure bedarfsweise zudosiert werden.

## Patentansprüche

1. Verfahren zur Reinigung von Polysilicium umfassend die Schritte
a.) Vorreinigung in zumindest einer Stufe miL einer oxidierenden Reinigungslösung enthaltend Fluorwasserstoffsäure, Salpetersäure und Hexafluorokieseläure,
b.) Hauptreinigung in einer weiteren Stufe mit einer Reinigungslösung, enthaltend Salpetersäure und Fluorwasserstoffsäure, wobei diese in der Vorreinigung wiederverwendet wird,
c.) Hydrophilierung in einer weiteren Stufe mit einer oxidierende Reinigungslösung.

2. Verfahren nach Anspruch 1, **dadurch gekennzeichnet, dass** die Reinigungslösung der Vorreinigung eine HNO₃ Konzentration im Bereich von 5 bis 35 Ges.-% besitzt.

3. Verfahren nach Anspruch 1 bis 2, **dadurch gekennzeichnet, dass** die Vorreinigung bei einer Temperatur von 0 bis 60°C stattfindet.

4. Verfahren nach Anspruch 1 bis 3, **dadurch gekennzeichnet:, dass** die Hydrophilierung in einer wässrigen Ozonlösung durchgerührt wird.

## Claims

1. Process for cleaning polysilicon, comprising the steps of
a.) precleaning in at least one stage with an oxidizing cleaning solution comprising hydrofluoric acid, nitric acid and hexafluorosilicic acid,
b.) main cleaning in a further stage with a cleaning solution comprising nitric acid and hydrofluoric acid, said cleaning solution being reused in the precleaning step,
c.) hydrophilization in a further stage with an oxidizing cleaning solution.

2. Process according to Claim 1, **characterized in that** the cleaning solution in the precleaning step has an HNO₃ concentration in the range from 5 to 35% by weight.

3. Process according to Claims 1 and 2, **characterized in that** the precleaning step takes place at a temperature of 0 to 60°C.

4. Process according to Claims 1 to 3, **characterized in that** the hydrophilization is performed in an aqueous ozone solution.

## Revendications

1. Procédé pour le nettoyage de polysilicium, comprenant les étapes
a.) nettoyage préalable dans au moins une étape avec une solution de nettoyage oxydante contenant de l'acide fluorhydrique, de l'acide nitrique et de l'acide hexafluorosilicique,
b.) nettoyage principal dans une autre étape avec une solution de nettoyage contenant de l'acide nitrique et de l'acide fluorhydrique, celle-ci étant réutilisée dans le nettoyage préalable,
c.) hydrophilisation dans une autre étape avec une solution de nettoyage oxydante.

2. Procédé selon la revendication 1, **caractérisé en ce que** la solution de nettoyage du nettoyage préalable présente une concentration en HNO₃ dans la plage de 5 à 35% en poids.

3. Procédé selon les revendications 1 à 2, **caractérisé en ce que** le nettoyage préalable a lieu à une température de 0 à 60°C.

4. Procédé selon les revendications 1 à 3, **caractérisé en ce que** l'hydrophilisation est réalisée dans une solution aqueuse d'ozone.
